# EUROPÄISCHE PATENTSCHRIFT

(11) **EP 3 667 878 B1**
(45) Veröffentlichungstag und Bekanntmachung des Hinweises auf die Patenterteilung: **13.09.2023**
(21) Anmeldenummer: 18211859.6
(22) Anmeldetag: 12.12.2018
(51) Int. Cl.: H02K 41/02, H02K 41/03

(54) **LINEARMOTOR SOWIE SEKUNDÄRTEIL FÜR EINEN LINEARMOTOR**
LINEAR MOTOR AND SECONDARY PART FOR A LINEAR MOTOR
MOTEUR LINÉAIRE AINSI QUE PIÈCE SECONDAIRE POUR UN MOTEUR LINÉAIRE

(43) Veröffentlichungstag der Anmeldung: 17.06.2020
(73) Patentinhaber: ETEL S.A., 2112 Môtiers (CH)
(72) Erfinder: Szczukiewicz, Sylwia, 2013 Colombier (CH); Moreno, Loïc, 25390 Guyans-Vennes (FR)
(74) Vertreter: Maikowski & Ninnemann Patentanwälte Partnerschaft mbB

(56) Entgegenhaltungen:
- CN-A- 104 967 276
- US-A1- 2003 160 524
- US-A1- 2007 152 513
- US-B1- 7 989 993

## Beschreibung

Diese Schrift betrifft Ausführungsformen eines eisenlosen Linearmotors.

Beispiele für einen eisenlosen Linearmotor, z.B. kernlose Linearmotoren, sind aus der US 2006/0175907 A1, der US 4,749,921 und der EP 2 884 638 A1 bekannt.

Außerdem beschreibt die noch unveröffentlichte europäische Patentanmeldung mit der Anmeldenummer EP 17178938.1 einen eisenlosen Linearmotor, insbesondere das Primärteil des eisenlosen Linearmotors.

Linearmotoren werden z.B. eingesetzt, wenn eine hochgenaue und gegebenenfalls auch schnelle Positionierung von Objekten, wie zum Beispiel eines Maschinenteiles einer Werkzeugmaschine, angestrebt wird. Dabei kann das Primärteil des Linearmotors über eine geeignete Schnittstelle unmittelbar mit dem zu bewegenden Maschinenteil oder einem sonstigem Objekt verbunden sein. Im Gegensatz zu einem konventionellen Rotationsmotor entfällt bei Linearmotoren die Notwendigkeit eines zwischen dem Linearmotor und dem anzutreibenden Objekt angeordneten Getriebes.

Für Anwendungen, die eine besonders präzise Positionierung erfordern, eignen sich vor allem so genannte eisenlose Linearmotoren, bei denen mindestens einer am Primärteil vorgesehenen Spule kein Kern, wie ein Eisenkern, zugeordnet ist. Hierdurch lassen sich störende Rastkräfte vermeiden. Es sind jedoch entsprechend größere Spulenströme erforderlich, um auch ohne Kern hinreichend große Kräfte am Primärteil des Linearmotors erzeugen zu können. Die Spulen werden zum Beispiel in Form vorgeformter Einzelspulen bereitgestellt. Das heißt, der zur Bildung der Spulen verwendete, z.B. mit einer Isolationsschicht versehene Draht wird nicht unmittelbar auf einen Kern gewickelt, sondern beispielsweise ohne Kern gewickelt und sodann zur Ausbildung des Elektromotors verbaut. Hierbei kann ein Aufsetzen der kernlosen Einzelspule auf einen in den Elektromotor integrierten Eisenkern erfolgen; es kann aber auch vorgesehen sein, die Einzelspule als so genannte "Luftspule" in dem Elektromotor ohne zugehörigen Kern zu betreiben.

Insbesondere dann, wenn ein Linearmotor für eine hochgenaue und gegebenenfalls auch schnelle Positionierung von Objekten, wie zum Beispiel eines Maschinenteiles einer Werkzeugmaschine, eingesetzt werden soll, ist ein geringes Gewicht vorteilhaft. Nicht nur das Primärteil, das, wie gesagt, z.B. ohne Eisenkern bereitgestellt wird, stellt dabei eine Herausforderung dar.

Auch das Sekundärteil des Linearmotors soll z.B. hinsichtlich seines Gewichts optimiert sein. Dies gilt beispielsweise insbesondere dann, wenn das Sekundärteil samt Primärteil, also der gesamte Motor, an das Primärteil eines anderen Motors gekoppelt ist.

Gleichzeitig muss das Sekundärteil aber Anforderungen betreffend die Stabilität erfüllen.

Problematisch ist in diesem Zusammenhang, dass Jochplatten, die mit Permanentmagneten bestückt sind und den magnetischen Pfad für das Primärteil bereitstellen, aufgrund des Magnetfelds der Permanentmagneten ständigen Kräften ausgesetzt sind, was zu Verbiegungen und somit zu Verformungen des magnetischen Pfads führen kann.

Eine zu starke Verbiegung oder Verformung des Sekundärteils könnte dazu führen, dass das Primärteil die Permanentmagneten berührt und dabei beschädigt wird. Bei einer solchen Berührung könnte unter Umständen auch eine Spule des Primärteils kontaktiert werden, sodass ein Kurzschluss entstehen kann. Diese Berührung und/oder Beschädigung gilt es unbedingt zu vermeiden.

Selbstverständlich kann zur Vermeidung einer solchen Verformung/Berührung die Luftspaltbreite vergrößert werden, was größere Toleranzen bei der Verformung zulässt, wobei damit bekanntlich Leistungseinbußen einhergehen würden. Andererseits sind starke Magneten und ein kleiner Luftspalt erstrebenswert, um eine hohe magnetische Flussdichte und damit hohe Kräfte zur Beschleunigung des Primärteils zu erzielen.

Einen anderen Ansatz zur Vermeidung einer solchen übermäßigen Verformung/Berührung beschreibt die noch unveröffentlichte europäische Patentanmeldung mit der Anmeldenummer EP 17196 215.2, wonach zur Verstärkung des Sekundärteils die Jochplatten mit Verstärkungsstrukturen ausgebildet sind, die der Entstehung besagter Verbiegungen entgegenwirken sollen. Ähnliche Ansätze sind aus der US 7,989,993 B1 sowie der US 2007/0052303 A1 bekannt.

Die US 2007/152513 A1 beschreibt einen kernlosen Linearmotor, wo die Dicke des Magneten variiert. Ziel dabei ist es, die Leistung des Motors zu verbessern und die Erhöhung der Oberflächentemperatur zu reduzieren. Ein ähnliches Vorhaben ist in der CN 104 967 276 A beschrieben. Ebenso offenbart US 2003/160524 A1 einen Linearmotor.

Es ist Aufgabe der vorliegenden Erfindung, ein Sekundärteil für einen Linearmotor vorzuschlagen, das auf vorteilhafte Weise eine Verkleinerung des Luftspalts vermeidet.

Hiervon ausgehend wird vorliegend ein eisenloser Linearmotor gemäß dem unabhängigen Anspruch 1 vorgeschlagen. Merkmale einiger Ausführungsbeispiele sind in den Unteransprüchen angegeben. Die Merkmale der Unteransprüche können miteinander zur Ausbildung weiterer Ausführungsformen kombiniert werden, sofern nicht ausdrücklich etwas anderes angegeben ist.

Beispielsweise sind bei dem eisenlosen Linearmotor die Spulen des Primärteils ohne Kern ausgebildet.

Das Sekundärteil liegt beispielweise als eine Art Basisprofilanordnung mit z.B. im Wesentlichen U-förmigen Querschnitt vor, wobei die Basisprofilanordnung im Wesentlichen durch das Abstandsglied, die beiden Jochplatten und die Permanentmagneten ausgebildet wird. Natürlich können weitere Bestandteile, wie Befestigungselemente und dergleichen, ebenfalls Teil der Basisprofilanordnung sein. Ebenso können mehrere Abstandsgliedglieder vorgesehen sein, die beispielsweise in Längsrichtung, also entlang des magnetischen Pfads des Sekundärteils, hintereinander angeordnet sind, sowie entsprechend mehrerer Jochplatten.

Bei einer Ausführungsform ist das Abstandsglied zur Führung des Primärteils entlang des magnetischen Pfades ausgebildet.

Beispielsweise bildet eine nutartige Aussparung des Abstandsglieds, in die das Primärteil teilweise eingelassen ist, eine Basis des magnetischen Pfades. Die Jochplatten bilden die beiden Schenkel des z.B. U-förmigen Querschnitts aus. Sie sind an dem Abstandsglied befestigt und erstrecken sich hiervon ausgehend entlang einer Erstreckungsrichtung in die Höhe, z.B. im Wesentlichen senkrecht zur Längserstreckung der nutartigen Aussparung, also senkrecht zur Richtung des magnetischen Pfades.

Die Jochplatten sind beispielsweise aus einem Eisen oder Stahl gefertigt. Sie sind ausgebildet, an ihrer jeweiligen Innenseite die Permanentmagneten aufzunehmen.

Die Permanentmagneten sind in Längsrichtung des Sekundärteils polalternierend angeordnet ("Nord-Süd-Nord-Süd-Nord-Süd..."), wobei die Reihenfolge an der anderen Sekundärteilseite, also an der gegenüberliegenden Jochplatte, komplementär ist ("Süd-Nord-Süd-Nord-Süd-Nord..."), womit sichergestellt ist, dass sich Nord- und Südpol stets einander gegenüberliegen. Die Permanentmagneten sind beispielsweise als Magnetplatten ausgebildet und in einem kleinen Abstand zueinander von z.B. 1 mm bis 3 mm angeordnet. Die Magnetplatten können jeweils ein (von einem einfachen rechteckförmigen Querschnitt abweichendes) Profil aufweisen, was nachstehend noch genauer ausgeführt werden wird.

Das Abstandsglied ist beispielsweise ebenfalls aus einem Eisen oder Stahl, beispielsweise aus einem Edelstahl gefertigt.

Als Alternative zu Eisen/Stahl kommen sowohl für das Abstandsglied als auch für die Jochplatten andere Materialien in Betracht, die eine hohe magnetische Permeabilität aufweisen.

Wenn die Jochplatten mit den Permanentmagneten bestückt sind und an dem Abstandsglied befestigt sind, fluchten die Permanentmagneten beispielweise mit Schenkeln des Abstandsgliedes, welche z.B. die nutartige Aussparung definieren.

Zur Befestigung des Sekundärteils in einer Anwendung, beispielsweise zur Befestigung an einem Maschinenteil, umfasst das Abstandsglied gemäß einer Ausführungsform eine Anzahl Montagestellen, die z.B. in Gestalt von Montageaussparungen vorliegen. Beispielsweise liegen die Montagestellen jeweils in Gestalt einer Bohrung vor, die mit einem Gewinde versehen ist. Zum Beispiel wird das Sekundärteil dann mit Schrauben, die in die Montageaussparungen greifen, an dem Maschinenteil befestigt. Bei einer Ausführungsform ist vorgesehen, dass die Jochplatten von der Befestigung des Sekundärteils in der Anwendung nicht betroffen sind. So berühren beispielsweise Schrauben, die für die Befestigung verwendet werden, nur das Abstandsglied, nicht aber die Jochplatten.

Erfindungsgemäß ist weiter vorgesehen, dass die Permanentmagneten jeweils eine Breite aufweisen, die in einer senkrecht zum magnetischen Pfad weisenden Erstreckungsrichtung abnimmt.

Gemäß einer Ausführungsform reduziert oder vermeidet die in Erstreckungsrichtung abnehmende Breite, also die mit der Höhe der Permanentmagneten abnehmende Breite der Permanentmagneten, eine entlang der Erstreckungsrichtung aufkommende Verkleinerung des Luftspalts. Z.B. könnte eine aufgrund der Magnetanziehungskräfte auftretende Verbiegung der Jochplatten im Falle von Permanentmagneten mit konstanter Breite zu einer solchen Verkleinerung des Luftspalts in einem oberen Bereich des Magnetpfads führen. Die in Erstreckungsrichtung abnehmende Breite, also die mit der Höhe der Permanentmagneten abnehmende Breite wirkt z.B. einer solchen, bei Verbiegung der Jochplatten entstehenden Verkleinerung des Luftspalts entgegen.

Das Profil der Permanentmagneten, also die spezifische Ausgestaltung der Breitenreduzierung, kann auf verschiedene Art ausgeführt sein:

Gemäß einer Ausführungsform weisen die Permanentmagneten an ihrer jeweiligen, zum Abstandsglied weisenden Unterseite eine maximale Breite auf und an ihrer jeweiligen Oberseite eine minimale Breite. Somit reduziert sich die Breite von der maximalen Breite auf die minimale Breite, wobei die minimale Breite z.B. weniger als 98%, weniger als 95% oder weniger als 90% der maximalen Breite beträgt.

Die Breite nimmt z.B. entlang wenigstens 40%, 60% oder 80% der Höhe des jeweiligen Permanentmagneten in Erstreckungsrichtung ab, wobei diese Abnahme kontinuierlich entlang der besagten wenigstens 40%, 60% oder 80% der Höhe des jeweiligen Permanentmagneten erfolgen kann. Bei einigen Ausführungsformen nimmt die Breite ausgehend von der Unterseite kontinuierlich über die gesamte (also 100% der) Höhe des jeweiligen Permanentmagneten bis hin zur Oberseite ab.

Bei einer weiteren Ausführungsform nimmt die Breite nur in einem Teilbereich der Höhe des jeweiligen Permanentmagneten ab. Zum Beispiel ist die Breite wenigstens in einem unteren Anteil des jeweiligen Permanentmagneten in Erstreckungsrichtung konstant, und nimmt nur in einem oberen Anteil des jeweiligen Permanentmagneten ab. Der untere Teilbereich kann z.B. durch die untere Hälfte oder unteren zwei Drittel (bezogen auf die Höhe) des jeweiligen Permanentmagneten gebildet sein, und der obere Teilbereich durch die obere Hälfte bzw. das obere Drittel.

Gemäß einer Ausführungsform nimmt die Breite kontinuierlich ab, entweder über die gesamte Höhe des jeweiligen Permanentmagneten oder nur im besagten Teilbereich.

Die Abnahme der Breite kann dabei linear erfolgen, z.B. derart, dass die Permanentmagneten jeweils eine senkrecht zum Magnetpfad liegende trapezförmige Querschnittsfläche aufweisen.

Gemäß einer anderen Ausführungsform erfolgt die Abnahme der Breite nicht-linear, sondern z.B. teilkreisförmig, teilelipsenförmig, treppenförmig, gestuft oder dergleichen.

Nach einer weiteren Ausführungsform ist die Breite und die Höhe entlang der Länge (in Magnetpfadrichtung) des jeweiligen Permanentmagneten konstant, sodass die Permanentmagneten jeweils eine senkrecht zum Magnetpfad liegende Querschnittsfläche aufweisen, die sich in Richtung des Magnetpfads nicht verändert.

Wie bereits dargelegt, können die magnetischen Anziehungskräfte, die einander gegenüberliegen Permanentmagneten auf die Jochplatten ausüben, dazu führen, dass sich die Jochplatten zueinander hin verbiegen. Aufgrund der profilierten Permanentmagneten ist das Sekundärteil jedoch ausgebildet, einen entlang der Erstreckungsrichtung im Wesentlichen konstant breiten Luftspalt bereitzustellen. Auf diese Weise kann z.B. ein vergleichsweise kleiner Luftspalt bereitgestellt werden und gleichzeitig sichergestellt werden, dass das Primärteil nicht mit den Permanentmagneten in Berührung gerät.

Es versteht sich, dass es aus Symmetriegründen zweckmäßig ist, dass sämtliche Permanentmagneten des Sekundärteils in gleicher Weise profiliert sein können, wobei - selbstverständlich - das jeweilige Profil der Permanentmagneten der einen Jochplatte spiegelsymmetrisch zu dem jeweiligen Profil der Permanentmagneten der anderen, gegenüberliegenden Jochplatte ausgebildet ist.

Aufgrund der der profilierten Permanentmagneten ist es zudem möglich, eine Verbiegung der Jochplatten zuzulassen und somit bei den Jochplatten auf Verstärkungsstrukturen, wie sie in dem eingangs zitierten Stand der Technik beschrieben sind, zu verzichten. Folglich ist bei einer Ausführungsform vorgesehen, dass die zwei Jochplatten jeweils eine senkrecht zum Magnetpfad liegende im Wesentlichen rechteckförmige Querschnittsfläche aufweisen, also z.B. nicht mit einer Verstärkungsstruktur versehen sind. Dies bedeutet zum Beispiel, dass die Jochplatten eine Breite aufweisen, die zumindest in dem Bereich, der entlang der Erstreckungsrichtung mit den Bereichen der Permanentmagneten, in denen die Breite der Permanentmagneten abnimmt, konstant sein kann, zumindest aber nicht abnimmt.

Nach einer anderen Ausführungsform sind die Jochplatten jeweils mit einer Verstärkungsstruktur versehen, die zwar eine oben beschriebene Verbiegung zulassen können, jedoch nicht über ein bestimmtes Maß hinaus. Beispielhafte Ausgestaltungen dieser optionalen zusätzlichen Verstärkungsstruktur werden im Folgenden beschrieben:

So ist gemäß einer Ausführungsform (zusätzlich zu den profilierten Permanentmagneten an den Innenseiten) an den Außenseiten der Jochplatten jeweils eine Verstärkungsstruktur angebracht. Die Verstärkungsstruktur kann monolithisch in der jeweiligen Jochplatte integriert sein, in dem die Jochplatte beispielsweise einem Fräsevorgang oder ähnlichem ausgesetzt wird, oder die Verstärkungsstruktur wird als separates Element an der Jochplatte installiert, beispielsweise angeklebt oder in anderer Weise befestigt. Bei einer Ausführungsform wird also eine breitere Platte durch einen Fräsvorgang oder ähnlichem strukturiert und hinsichtlich der Breite lokal verjüngt, um bei der anderen Ausführungsform wird eine zunächst dünnere Platte mit einer separat hergestellten Verstärkungsstruktur versehen.

Unabhängig davon, welche der beiden oben beschriebenen Ausführungsformen vorliegt, wird die Verstärkungsstruktur, die durch eine in Richtung des magnetischen Pfades periodische Veränderung der Plattenbreite ausgebildet ist, z.B. derart vorgesehen, dass lokale Minima der Verstärkungsstruktur entlang der Richtung des magnetischen Pfades mit den Montagestellen des Abstandsglied überlappen. Der magnetische Pfad erstreckt sich zum Beispiel parallel zur Längserstreckung des Sekundärteils.

Die Montagestellen sind z.B. in einem regelmäßigen Abstand entlang der Längsrichtung des Sekundärteils im Abstandsglied vorgesehen. In Längsrichtung bzw. in Richtung des magnetischen Pfades überlappen sie z.B. mit den lokalen Minima der Verstärkungsstruktur.

Bei einer Ausführungsform ist jedem lokalen Minimum der Verstärkungsstruktur einer der beiden Jochplatten genau eine Montagestelle zugeordnet. Die Verstärkungsstrukturen der beiden Jochplatten sind beispielsweise ohne Versatz zueinander angeordnet; so gesehen können, wenn die Montagestelle als durchgängige Aussparung ausgebildet ist, jeder Montagestelle auch zwei Minima zugeordnet sein.

Aufgrund der Verstärkungsstruktur ist, gemäß einer Ausführungsform, die Breite der jeweiligen Jochplatte in Längsrichtung nicht konstant. In Längsrichtung wechselt die Breite beispielsweise regelmäßig von einem niedrigen Wert zu einem hohen Wert, wobei der Wertunterschied im Bereich von 2 bis 4 mm liegen kann. Eine Basisbreite der Jochplatte, zum Beispiel im unteren Bereich der Jochplatte, beträgt z.B. 6 mm. Pro Periode der Verstärkungsstruktur ändert sich der Wert beispielsweise einmal vom niedrigen zum hohen Wert und einmal vom hohen Wert zurück zum niedrigen Wert.

Bei einer Ausführungsform ist die Verstärkungsstruktur so ausgestaltet, dass die Strecke, entlang der die Breite der Jochplatte pro Periode den höheren Wert aufweist, mit zunehmender Höhe der Jochplatte abnimmt. Umgekehrt ausgedrückt ist die Verstärkungsstruktur bei dieser Ausführungsform so ausgestaltet, dass auf ihrem tiefsten Niveau die Strecke, entlang der die Breite der Jochplatte pro Periode den niedrigen Wert aufweist, minimal ist. Je nach Ausgestaltung der Verstärkungsstruktur (dazu sogleich) kann diese Strecke auch nahezu punktförmig ausfallen.

Dort, wo die Strecke, entlang der die Breite der Jochplatte pro Periode der Verstärkungsstruktur den niedrigen Wert aufweist, minimal ist, befindet sich nach der Diktion dieser Schrift ein lokales Minimum der Verstärkungsstruktur. An diesen Stellen entfaltet die durch die Verstärkungsstruktur herbeigeführte Jochplattenverstärkung also ihre geringste Wirkung (mit Blick auf die Reduzierung der eingangs geschilderten Verbiegungen).

Dort, wo die Strecke, entlang der die Breite der Jochplatte pro Periode der Verstärkungsstruktur den höheren Wert aufweist, minimal ist, befindet sich nach der Diktion dieser Schrift ein lokales Maximum der Verstärkungsstruktur. An diesen Stellen entfaltet die durch die Verstärkungsstruktur herbeigeführte Jochplattenverstärkung also ihre größte Wirkung (mit Blick auf die Reduzierung der eingangs geschilderten Verbiegungen).

In Längsrichtung schließen die beiden Jochplatten bei einer Ausführungsform des Sekundärteils an beiden Enden mit einem jeweiligen lokalen Maximum der Verstärkungsstruktur ab.

Zum Beispiel sind für jede Periode der Verstärkungsstruktur in Längsrichtung des Sekundärteils zwei magnetische Perioden vorgesehen. Jede magnetische Periode ist gebildet durch zwei Permanentmagneten an jeder der zwei Jochplatten, die, wie gesagt, polalternierend nebeneinander und polalternierend gegenüberliegend angeordnet sind. Eine Periode der Verstärkungsstruktur entspricht hinsichtlich ihrer Breite also etwa der Breite von vier nebeneinander angeordneten Permanentmagneten. Dabei kann das lokale Maximum derart angeordnet sein, dass sich neben diesem in und entgegen der Längsrichtung jeweils zwei Permanentmagneten befinden.

Jede Periode der Verstärkungsstruktur kann ein Verstärkungselement aufweisen, dessen Breite entlang der Höhe des jeweiligen Schenkels (ausgebildet durch die jeweilige Jochplatte) abnimmt, beispielweise um wenigstens 50% und/oder in linearer Art. Die Verstärkungselemente der Verstärkungsstruktur können nahtlos ineinander übergehen. So entstehen oben besagte lokale Minima und lokale Maxima, also Minima und Maxima jener Streckenabschnitte, entlang derer die Breite entweder den höheren oder den niedrigeren Wert aufweist.

Darüber hinaus ist bei einer Ausführungsform des Sekundärteils vorgesehen, dass jedes Verstärkungselement zumindest in einem oberen Teilbereich eine entlang der Höhe des jeweiligen Schenkels abnehmende Breite aufweist. Die Verstärkungselemente können also jeweils mit einer Fase versehen sein. Auf diese Weise wird das Gewicht des Sekundärteils weiter reduziert. Zum Beispiel erstreckt sich die Fase entlang wenigstens 10% der Gesamthöhe des jeweiligen Verstärkungselements.

Die Verstärkungselemente der Verstärkungsstruktur weisen bei einer Ausführungsform jeweils die Form eines Trapez oder eines Dreiecks auf, was mit Blick auf die in den Figuren dargestellten Ausführungsbeispiele noch näher erläutert werden wird. Die lokalen Minima, also jene minimalen Streckenabschnitte, entlang derer die Breite der Jochplatte den niedrigeren Wert aufweist, werden beispielsweise durch den Übergang zwischen zwei benachbarten Verstärkungselementen ausgebildet, wobei dieser Übergang "nahtlos" sein kann.

Bei einer weiteren Ausführungsform weisen die Jochplatten Befestigungsaufnahmen auf, die für die Zwecke der Befestigung am Abstandsglied ausgebildet sind. Dazu werden zum Beispiel Befestigungsmittel durch die Befestigungsaufnahmen der Jochplatten geführt und an dem Abstandsglied befestigt. In Richtung des magnetischen Pfades überlappen diese Befestigungsaufnahmen mit den lokalen Maxima der Verstärkungsstruktur (sofern vorhanden), also mit jenen Abschnitten (die ebenfalls nahezu punktförmig ausfallen können), wo die Strecke, entlang der die Breite der Jochplatte den höheren Wert aufweist, minimal ist. Auf diese Weise wird eine weitere Stabilitätsverbesserung erzielt.

Unabhängig von der optionalen Verstärkungsstruktur liegt es außerdem im Rahmen der Erfindung, dass die Jochplatten ausgebildet sind, nicht von an die Montagestellen angreifenden Befestigungselementen kontaktiert zu werden. Hierzu weisen die Jochplatten beispielsweise Einschnitte auf, die die Montagestellen des Abstandsglieds freilegen.

Die Stellen, an denen die Jochplatten an dem Abstandsglied befestigt werden, überlappen z.B. mit den lokalen Maxima der Verstärkungsstruktur (sofern vorhanden), und die Stellen, an denen das Sekundärteil über das Abstandsglied in einer Anwendung, beispielsweise an einem Maschinenteil, befestigt wird, überlappen mit den lokalen Minima der Verstärkungsstruktur.

Außerdem kann das Abstandsglied zur weiteren Gewichtsreduzierung eine Vielzahl freibleibender Aussparungen aufweisen.

Der eisenlose Linearmotor des ist beispielsweise hinsichtlich seiner elektromechanischen Funktion ausgebildet, wie es in der DE 10 2015 222 265 A1 und der EP 2 884 638 A1 beschrieben ist.

Weitere Einzelheiten und Vorteile der Erfindung werden bei der nachfolgenden Beschreibung einiger Ausführungsbeispiele anhand der Figuren deutlich werden.

Es zeigen:
- Fig. 1: exemplarisch und schematisch einen Ausschnitt einer perspektivischen Ansicht eines Linearmotors gemäß einer oder mehreren Ausführungsformen;
- Fig. 2 u. 3: zur Veranschaulichung der Problemstellung jeweils exemplarisch und schematisch einen Ausschnitt einer Querschnittsansicht eines Sekundärteils mit einem darin eingelassen Primärteil;
- Fig. 4: exemplarisch und schematisch einen Ausschnitt einer Querschnittsansicht eines Sekundärteils mit einem darin eingelassen Primärteil gemäß einer oder mehreren Ausführungsformen;
- Fig. 5: exemplarisch und schematisch Ausschnitte von Querschnittsansichten einiger Varianten eines Permanentmagneten gemäß mehreren Ausführungsformen;
- Fig. 6A-B: jeweils exemplarisch und schematisch einen Ausschnitt einer perspektivischen Ansicht eines Sekundärteils gemäß einer oder mehreren Ausführungsformen;
- Fig. 7: exemplarisch und schematisch einen Ausschnitt einer perspektivischen Aufrissansicht eines Sekundärteils gemäß einer oder mehreren Ausführungsformen;
- Fig. 8A-C: exemplarisch und schematisch einen jeweiligen Ausschnitt einer Aufsicht, einer perspektivischen Ansicht und einer Querschnittsansicht einer Jochplatte gemäß einer oder mehreren Ausführungsformen;
- Fig. 9A-B: exemplarisch und schematisch einen jeweiligen Ausschnitt einer Aufsicht und einer Querschnittsansicht eines Sekundärteils gemäß einer oder mehreren Ausführungsformen;
- Fig. 10: exemplarisch und schematisch einen Ausschnitt einer perspektivischen Ansicht eines Abstandsglieds gemäß einer oder mehreren Ausführungsformen; und
- Fig. 11: exemplarisch und schematisch einen Ausschnitt einer perspektivischen Ansicht eines Linearmotors gemäß einer oder mehreren Ausführungsformen.

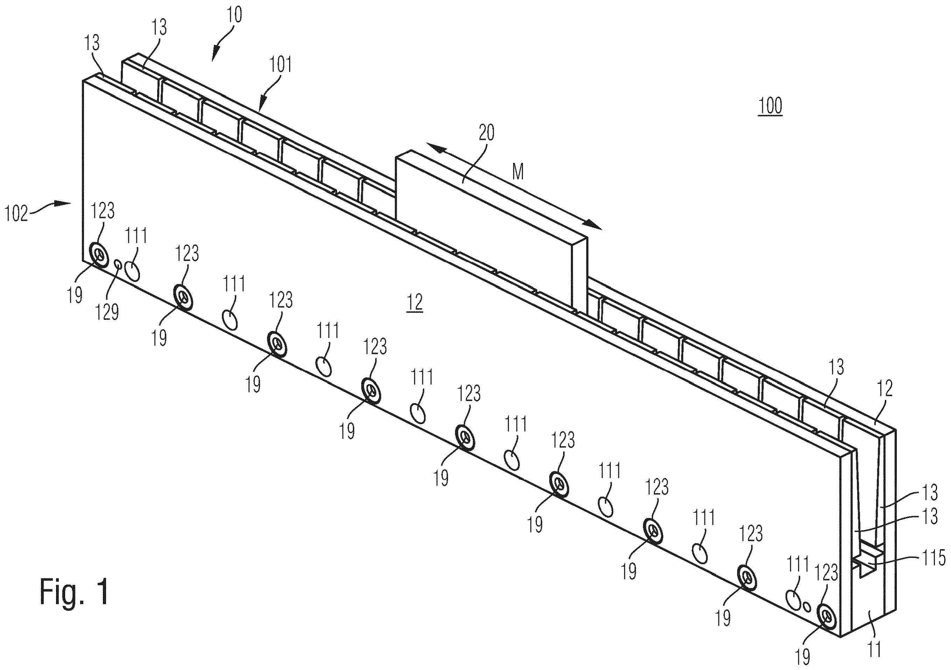

Fig. 1 zeigt exemplarisch und schematisch einen Ausschnitt einer perspektivischen Ansicht eines Linearmotors 100 gemäß einer oder mehreren Ausführungsformen.

Der Linearmotor 100 umfasst ein Sekundärteil 10 und ein Primärteil 20, wobei das Sekundärteil 10 einen magnetischen Pfad M bereitstellt, und wobei das Primärteil 20 für eine lineare Bewegung entlang des magnetischen Pfads M ausgebildet ist. Der magnetische Pfad erstreckt sich entlang der durch den in der Fig. 1 gezeigten Doppelpfeil angedeuteten Richtung und somit in Längsrichtung zu dem Sekundärteil 10.

Der Linearmotor 100 ist zum Beispiel als eisenloser Linearmotor ausgebildet, bei dem die Spulen des Primärteils 20 keinen Kern aufweisen.

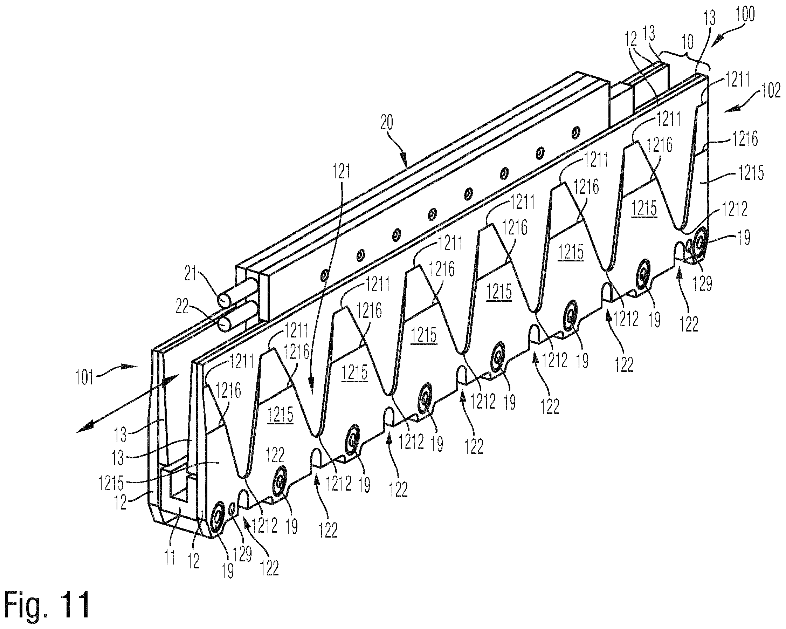

Das Primärteil 20 kann in einer Art und Weise ausgebildet sein, wie es in der europäischen Patentanmeldung mit der Nummer EP17178938.1 beschrieben ist. Die Spulen des Primärteils 20 werden z.B. über eine Stromzuführung (s. Fig. 11, Bezugsziffer 21) mit einem Strom beaufschlagt. Über eine Kabelleitung (s. Fig. 11, Bezugsziffer 22) können ein oder mehrere Messsignale ausgelesen werden, wie eine Temperatur, z.B. eine Temperatur an einer der Spulen des Primärteils 20.

Das Sekundärteil 10 umfasst ein Abstandsglied 11. Bei einer Ausführungsform ist das Abstandsglied 11 zur Führung des Primärteils 20 entlang des magnetischen Pfades M ausgebildet.

Zum Beispiel ist bei dem Abstandsglied 11 eine nutartige Aussparung 115 vorgesehen, in die das Primärteil 20 teilweise eingelassen ist, wie auch in der Fig. 11 veranschaulicht ist.

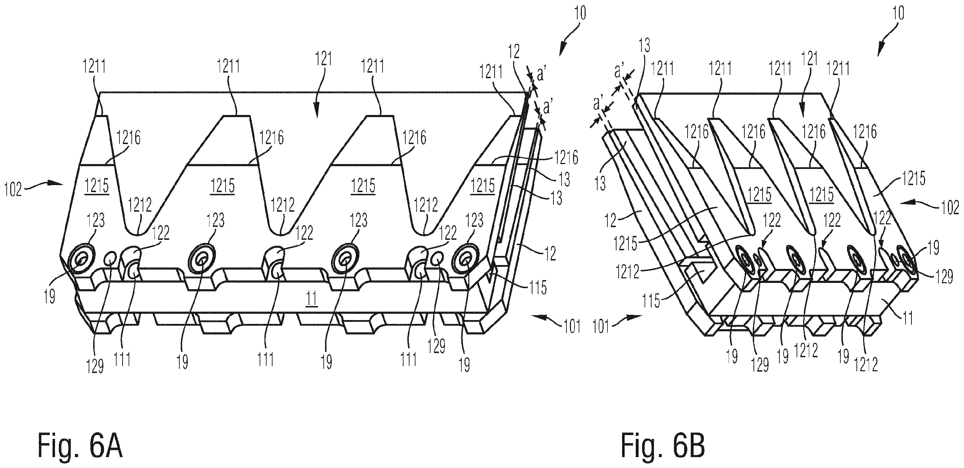

Das Abstandsglied 11 kann außerdem eine Anzahl Montagestellen 111 aufweisen, die für eine Befestigung des Sekundärteils in einer Anwendung ausgebildet sind. Über die Montagestellen 111, die auch in den Fig. 6A bis 10 dargestellt sind, wird das Sekundärteil 10 zum Beispiel an einem Maschinenteil befestigt. Die Montagestellen 111 sind zum Beispiel als Gewindebohrungen oder einfache Durchgangspassagen ausgebildet, in die Befestigungsschrauben oder andere Befestigungsmittel eingreifen können.

An jeder Seite 101 und 102 des Sekundärteils 10 ist wenigstens eine Jochplatte 12 vorgesehen. Die Jochplatten 12 bilden Schenkel aus, indem sie sich einander gegenüberliegend in Ebenen parallel zum magnetischen Pfad M erstrecken. Auf diese Weise entsteht ein Basisprofil mit einem U-förmigen Querschnitt, dessen Boden z.B. durch die Unterseiten der Jochplatten 12 und die Unterseite des Abstandsglieds 11 ausgebildet wird.

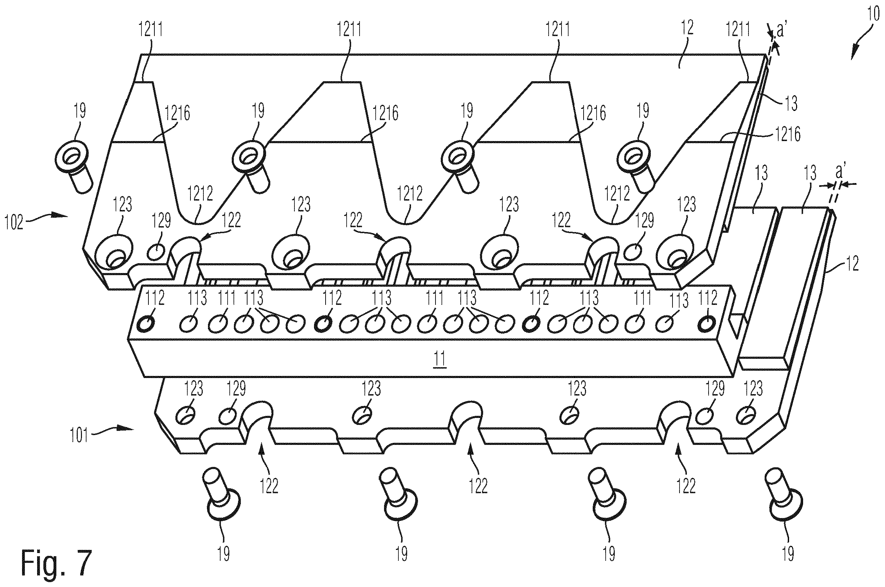

Zum Beispiel weisen die Jochplatten 12 Befestigungsaufnahmen 123 auf, die für die Zwecke der Befestigung an dem Abstandglied 11 zur Aufnahme von Befestigungsmitteln 19 ausgebildet sind, wie dies etwas näher in der Fig. 7 dargestellt ist. Die Befestigungsmittel 19 sind zum Beispiel als Schrauben ausgebildet, die durch die Befestigungsaufnahmen 123 geführt werden und in Gewinde 112 (s. Fig. 7) des Abstandsglieds 11 greifen.

An den Innenseiten weisen die beiden Jochplatten 12 jeweils eine Vielzahl von Permanentmagneten 13 auf. Die Permanentmagneten 13 sind in Längsrichtung des Sekundärteils 10, also in Richtung des Magnetpfads M, polalternierend angeordnet ("Nord-Süd-Nord-Süd-Nord-Süd..."), wobei die Reihenfolge an der anderen Sekundärteilseite, also an der gegenüberliegenden Jochplatte, komplementär ist ("Süd-Nord-Süd-Nord-Süd-Nord..."), womit sichergestellt ist, dass sich Nord- und Südpol stets einander gegenüberliegen.

Die Permanentmagneten 13 sind beispielsweise als Magnetplatten ausgebildet und in Längsrichtung (parallel zum magnetischen Pfad M) in einem kleinen Abstand zueinander von z.B. 1 mm bis 3 mm angeordnet, wobei die Magnetplatten jeweils ein (von einem einfachen rechteckförmigen Querschnitt abweichendes) Profil aufweisen können, was nachstehend noch genauer ausgeführt werden wird.

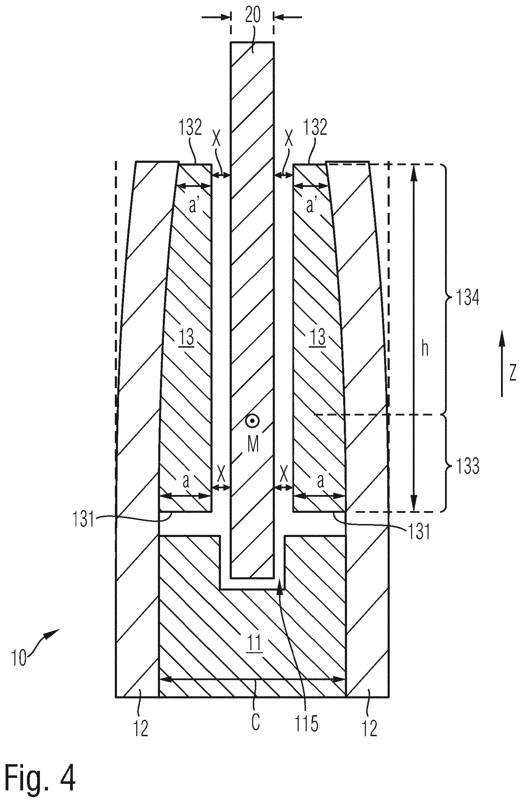

Wie in der Querschnittsansicht der Fig. 4 schematisch dargestellt ist, fluchten die Permanentmagneten 13 mit Schenkeln des Abstandsgliedes 11, die die nutartige Aussparung 115 zur Führung des Primärteils 20 begrenzen.

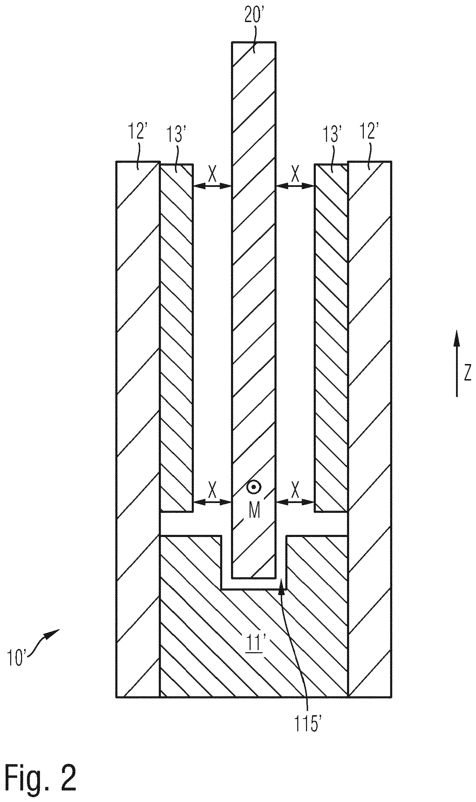

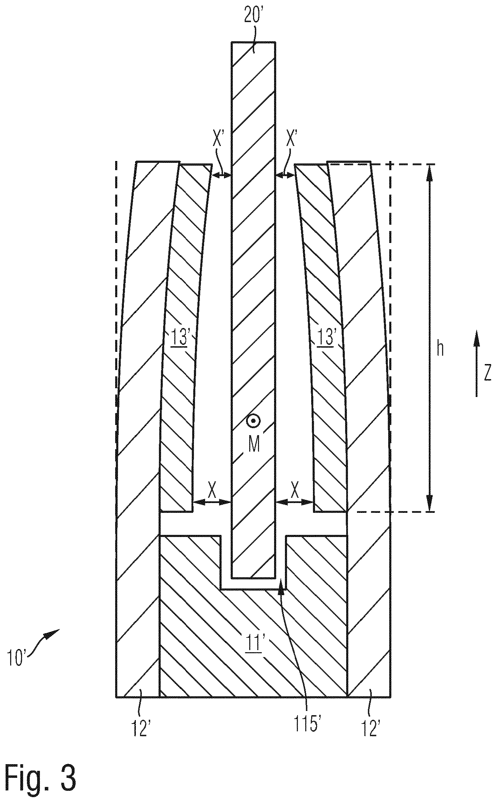

Die Magnetplatten können jeweils ein Profil aufweisen, wie in der Fig. 1 bereits schematisch illustriert ist, und was nachstehend noch genauer ausgeführt werden wird. Zunächst soll jedoch mit Blick auf die Fig. 2 und 3 ein der vorliegenden Erfindung zugrundeliegendes technisches Problem erläutert werden.

Fig. 2 u. 3 zeigen zur Veranschaulichung der Problemstellung jeweils exemplarisch und schematisch einen Ausschnitt einer Querschnittsansicht eines Sekundärteils 10`. Das Sekundärteil 10' weist ein Abstandsglied 11' mit einer Aussparung 115' auf, sowie Jochplatten 12' und Permanentmagneten 13`, wobei diese Komponenten entsprechend der obigen Beschreibung angeordnet und ausgebildet sein können. Allerdings sind die Permanentmagneten 13' nicht profiliert. Das Sekundärteil 10' stellt für ein Primärteil 10' einen magnetischen Pfad M bereit.

Fig. 2 veranschaulicht eine in der praktischen Anwendung kaum erzielbare idealisierte Konfiguration, bei der die Breite X des Luftspalts entlang der Erstreckungsrichtung Z (also senkrecht zur Magnetpfadrichtung M) konstant ist. Fig. 3 veranschaulicht eine (etwas übertriebene, also nicht maßstabsgetreue) realere Konfiguration, wonach sich die Jochplatten 12' aufgrund der magnetischen Anziehungskräfte der Permanentmagneten 13' zueinander hin verbiegen. Dies resultiert in einem Luftspalt, dessen Breite sich von einem maximalen Wert X in einem unteren Bereich bis zu einem minimalen Wert X' in einem oberen Bereich entlang der Erstreckungsrichtung Z reduziert. Mit dieser Reduzierung der Luftspaltbreite steigt das Risiko, dass das Primärteil 20' mit den Permanentmagneten 13' in Berührung gerät.

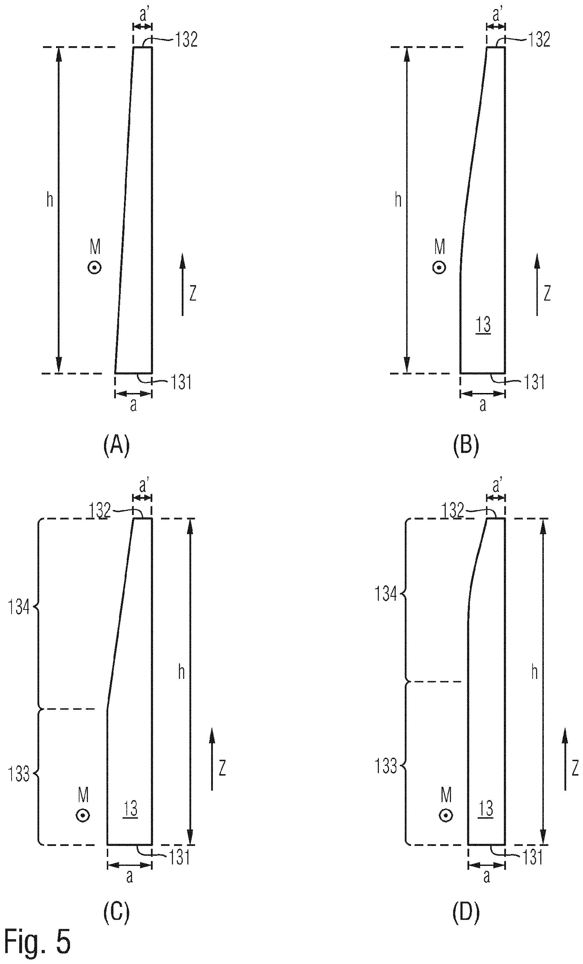

Um dem entgegenzuwirken, sehen die hier beschriebenen Ausführungsformen vor, dass die Permanentmagneten 13 profiliert sind, und zwar indem die Permanentmagneten 13 jeweils eine Breite aufweisen, die in der senkrecht zum magnetischen Pfad M weisenden Erstreckungsrichtung Z abnimmt, wie dies in Fig. 5 schematisch veranschaulicht ist.

Trotz der in vielen praktischen Anwendungen kaum zu vermeidbaren Verbiegung der Jochplatten 12 kann somit sichergestellt werden, dass der sich der Luftspalt nicht auf eine Breite verkleinert, die das Risiko einer Berührung zwischen Primärteil 20 und Permanentmagneten 13 birgt. Das Sekundärteil 10 ist mit seinen profilierten Permanentmagneten 13 derart ausgestaltet, dass die Luftspaltbreite X entlang der Erstreckungsrichtung Z im Wesentlichen konstant ist.

Das Profil der Permanentmagneten, also die Ausgestaltung der Breitenreduzierung, kann auf verschiedene Art ausgeführt sein:

Gemäß einer Ausführungsform weisen die Permanentmagneten 13 an ihrer jeweiligen, zum Abstandsglied 11 weisenden Unterseite 131 eine maximale Breite a auf und an ihrer jeweiligen Oberseite 132 eine minimale Breite a`. Somit reduziert sich die Breite der Permanentmagneten 13 jeweils von der maximalen Breite a auf die minimale Breite a`, wobei die minimale Breite a' z.B. weniger als 98%, weniger als 95% oder weniger als 90% der maximalen Breite a beträgt, wie in Fig. 4 veranschaulicht.

Die Breite nimmt z.B. entlang wenigstens 40%, 60% oder 80% der Höhe h des jeweiligen Permanentmagneten 13 in Erstreckungsrichtung Z ab. Bei einigen Ausführungsformen nimmt die Breite ausgehend von der Unterseite 131 kontinuierlich über die gesamte (100%) der Höhe h des jeweiligen Permanentmagneten 13 bis hin zur Oberseite 132 ab, wie in Fig. 4 und Fig. 5, dort Varianten (A) und (B), veranschaulicht ist.

Bei einer weiteren Ausführungsform nimmt die Breite nur in einem Teilbereich der Höhe h des jeweiligen Permanentmagneten 13 ab. Zum Beispiel ist die Breite wenigstens in einem unteren Anteil 133 des jeweiligen Permanentmagneten 13 in Erstreckungsrichtung Z konstant, und nimmt nur in einem oberen Anteil 134 des jeweiligen Permanentmagneten 13 ab, wie in Fig. 5, Varianten (C) und (D) veranschaulicht. Der untere Teilbereich 133 kann z.B. durch die untere Hälfte oder unteren zwei Drittel (bezogen auf die Höhe h) des jeweiligen Permanentmagneten 13 gebildet sein, und der obere Teilbereich 134 durch die obere Hälfte bzw. das obere Drittel.

Gemäß einer Ausführungsform nimmt die Breite kontinuierlich ab, entweder über die gesamte Höhe h des jeweiligen Permanentmagneten 13 (wie in Fig. 4, Fig. 5 (A) und (B) veranschaulicht) oder nur im besagten Teilbereich (wie in Fig. 5 (C) und (D) veranschaulicht).

Die Abnahme der Breite kann dabei linear erfolgen, z.B. derart, dass die Permanentmagneten 13 jeweils eine senkrecht zum Magnetpfad M liegende trapezförmige Querschnittsfläche aufweisen (wie in Fig. 4, und Fig. 5 (A) veranschaulicht).

Gemäß einer anderen Ausführungsform erfolgt die Abnahme der Breite nicht-linear, sondern z.B. teilkreisförmig, teilelipsenförmig (wie in Fig. 5 (B) und (D) veranschaulicht), treppenförmig, gestuft oder dergleichen.

Nach einer weiteren Ausführungsform ist die Breite a/a' und die Höhe h entlang der Länge (in Magnetpfadrichtung M) des jeweiligen Permanentmagneten 13 konstant, sodass die Permanentmagneten 13 jeweils eine senkrecht zum Magnetpfad M liegende Querschnittsfläche aufweisen, die sich in Richtung des Magnetpfads M nicht verändert.

Wie in Fig. 1 und 4 dargestellt, können die Jochplatten 12 einfache Rechteckprofile aufweisen, also (im nicht verbogenen Zustand, s. Fig. 2) jeweils eine senkrecht zum Magnetpfad M liegende im Wesentlichen rechteckförmige Querschnittsfläche.

Die Jochplatten 12 sind beispielsweise an den beiden Außenseiten des Abstandsglieds 11 befestigt und erstrecken sich von dort aus entlang der Erstreckungsrichtung Z in die Höhe. Das Abstandsglied 11 kann ein durch die Aussparung 115 definiertes U-Profil aufweisen, und die an den Jochplatten befestigten Permanentmagneten 13 fluchten parallel zu den Jochplatten 12 oberhalb der Schenkel des U-Profils des Abstandsglieds 11. In die Aussparung 115 ist das Primärteil 20 teilweise eingelassen.

Die Breite c des Abstandsglied 11 beträgt beispielsweise etwa der Summe aus dem Zweifachen der maximalen Breite a eines jeweiligen Permanentmagneten 13, dem Zweifachen der Luftspaltbreite X (etwa an der Unterseite 131 Permanentmagneten 13 und der Breite b des in die Aussparung 115 eingelassenen Teils des Primärteils 20.

Die profilierten Permanentmagneten 13 werden z.B. zunächst an den Jochplatten 12 angebracht, bspw. geklebt, und sodann werden die Jochplatten 12 und das Abstandsglied 11 zusammengefügt, um das Sekundärteil 10 auszubilden. Aufgrund der dann entstehenden magnetischen Anziehungskräfte kommt es zu der in Fig. 4 (nicht maßstabsgetreu) veranschaulichten Verbiegung der Jochplatten 12, die jedoch aufgrund der profilierten Permanentmagneten 13 nicht zu einer nachteiligen Reduzierung der Luftspaltbreite X führt. Die Verbiegung der Jochplatten 12 kann aufgrund der profilierten Permanentmagneten 13 sogar vorteilhaft sein, da sie zu einer Vergrößerung des Verhältnisses von magnetischen Material zu Magnetpfadvolumen führt.

Gemäß einer Ausführungsform weisen die profilierten Permanentmagneten 13 z.B. jeweils eine ebene (nicht-profilierte) Grenzfläche auf, und diese ebene Grenzfläche ist mittels des Klebers an die z.B. ebenfalls ebene Innenseite der jeweiligen Jochplatte 12 angekoppelt. Die profilierte (z.B. schräge oder gekrümmte) Seite des jeweiligen Permanentmagneten 13 weist zum magnetischen Pfad M. Die ebene Innenseite der Jochplatte 12 bildet z.B. einen Untergrund für den daran angekoppelten Permanentmagneten 13 aus, der sich aufgrund der magnetischen Anziehungskräfte nicht-linear verbiegen kann, wie in den Fig. 3-4 veranschaulicht. So könnten Lücken zwischen der Jochplatte 12 und dem daran gekoppelten Permanentmagneten 13 entstehen, welche jedoch durch den Kleber ausgeglichen werden. Der zur Kopplung der Permanentmagneten 13 an die Jochplatten 12 eingesetzte Kleber kann also z.B. derart gewählt und aufgetragen werden, dass der Kleber die Verbiegung der Jochplatten 12 kompensiert und so trotz der Verbiegung eine dauerhafte Kopplung zwischen Jochplatten 12 und Permanentmagneten 13 sicherstellt.

Die Fig. 6A und 6B zeigen jeweils schematisch und exemplarisch eine perspektivische Ansicht des Sekundärteils 10 gemäß einer weiteren Ausführungsform.

Zum Bespiel sind die Jochplatten 12 gemäß der dort dargestellten Ausführungsform weiter ausgebildet, nicht von an die Montagestellen 111 des Abstandsglieds 11 angreifenden Befestigungselementen kontaktiert zu werden. Dazu weisen die Jochplatten 12 Einschnitte 122 auf, die die Montagestellen 111 des Abstandsglieds 11 freilegen. Die Montagestellen 111 sowie die in diese eingreifenden Befestigungsmittel tragen nicht zwingend zur Stabilität des Sekundärteils 10 bei. Das Sekundärteil 10 wird also z.B. derart in einer Anwendung installiert, dass hierzu notwendigen Befestigungsmittel an die Montagestellen 111 des Abstandsglieds ankoppeln, ohne die Jochplatten 12 zu kontaktieren. Die Einschnitte 122 tragen zur Gewichtsreduzierung bei.

Entsprechend dem Vorstehenden ist eine Verbiegung der Jochplatten 12 jedoch auch im Falle von profilierten Permanentmagneten 13 über ein bestimmtes Maß hinaus zu vermeiden.

Um diese weitergehende Verbiegung zu reduzieren bzw. zu vermeiden, können die Jochplatten 12 optional mit einer Verstärkungsstruktur versehen sein, was mit Bezug auf die Fig. 6A bis 11 noch näher ausgeführt werden wird. Die im Folgenden beschriebene Verstärkungsstruktur ist jedoch rein optional und nur dann vorzusehen, wenn die Verbiegung der Jochplatten 12 trotz profilierter Permanentmagneten 13 ohne eine solche Verstärkungsstruktur zu einer zu übermäßigen Reduzierung der Luftspaltbreite X führen würde.

An den Außenseiten weisen die beiden Jochplatten 12 dann z.B. jeweils eine Verstärkungsstruktur 121 auf. Die Verstärkungsstrukturen 121 dienen dazu, einer übermäßigen Verbiegung der Jochplatten 12 entgegenzuwirken.

Wie bereits eingangs erläutert, sind diese Verstärkungsstrukturen 121 nicht zwingend vorgesehen, da die profilierten Permanentmagneten 13 eine Verbiegung der Jochplatten zumindest bis zu einem gewissen Grad zulassen bzw. sogar zulassen sollen, um eine entlang der Erstreckungsrichtung Z im Wesentlichen konstante Luftspaltbreite X zu erzielen. Die Verstärkungsstrukturen 121 sind z.B. nur dann vorgesehen, um eine Verbiegung entgegenzuwirken bzw. zu vermeiden, die über diesen Grad hinausgeht bzw. hinausgehen würde.

An jeder Seite sind die optionalen Verstärkungsstrukturen 121 durch eine in Richtung des magnetischen Pfades (also in Längsrichtung des Sekundärteils 10) periodische Veränderung der Plattenbreite gebildet. Die optionalen Verstärkungsstrukturen 121 an beiden Seiten 101,102 des Sekundärteils 10 können identisch zueinander ausgebildet sein und auch aufeinander ausgerichtet sein, also ohne Versatz in Längsrichtung zueinander. Nachfolgend wird stets von "der Verstärkungsstruktur 121" gesprochen, wobei damit die optionalen Verstärkungsstrukturen 121 an beiden Sekundärteilseiten 101, 102 gemeint sind.

Die optionale Verstärkungsstruktur 121 weist eine Vielzahl von lokalen Maxima 1211 und lokalen Minima 1212 auf. Dort, wo die Strecke, entlang der die Breite der Jochplatte 12 pro Periode der Verstärkungsstruktur 121 den niedrigen Wert aufweist, minimal ist, befindet sich nach der Diktion dieser Schrift ein lokales Minimum 1212 der Verstärkungsstruktur 121. An diesen Stellen 1212 entfaltet die durch die Verstärkungsstruktur 121 herbeigeführte Jochplattenverstärkung also ihre geringste Wirkung (mit Blick auf die Vermeidung von den eingangs geschilderten Verbiegungen).

Dort, wo die Strecke, entlang der die Breite der Jochplatte 12 pro Periode der Verstärkungsstruktur 121 den höheren Wert aufweist, minimal ist, befindet sich nach der Diktion dieser Schrift ein lokales Maximum 1211 der Verstärkungsstruktur 121. An diesen Stellen entfaltet die durch die Verstärkungsstruktur 121 herbeigeführte Jochplattenverstärkung also ihre größte Wirkung.

Bei den in den Fig. 6A-11 dargestellten Ausführungsbeispielen sind vier lokale Maxima 1211 vorgesehen sowie der dazwischen befindliche drei lokale Minima 1212.

Die optionale Verstärkungsstruktur 121 ist bei den dargestellten Ausführungsbeispielen durch eine Vielzahl von aneinander anknüpfenden Verstärkungselementen 1215 gebildet. Für jede Periode der Verstärkungsstruktur 121 ist je ein Verstärkungselement 1215 vorgesehen. Die Breite jedes optionalen Verstärkungselements 1215 nimmt entlang der Höhe des jeweiligen Schenkels ab, beispielsweise um wenigstens 50%. Bei einem dreiecksförmigen Verstärkungselement würde die Breitenabnahme folglich etwa 100% betragen. Die Verstärkungselemente sind z.B. zu dimensioniert, dass die Breitenabnahme entlang der Höhe in linearer Weise erfolgt. Durch die Breitenabnahme entstehen die lokalen Minima 1212 (nämlich dort, wo zwei Verstärkungselemente 1215 aneinander angrenzen) und die lokalen Maxima 1211, die zum Beispiel in der Mitte einer jeweiligen Periode positioniert sind.

Für jede Periode der optionalen Verstärkungsstruktur 121 sind in Längsrichtung des Sekundärteils 10 zum Beispiel genau zwei magnetische Perioden vorgesehen. Bei diesem Ausführungsbeispiel entspricht die Breite eines jeden Verstärkungselements 1215 der Breite von vier, in Längsrichtung nebeneinander angeordneten Permanentmagneten 13.

Entsprechend den weiter oben beispielhaft genannten Maßangaben hat eine magnetische Periode beispielsweise eine Länge von einigen Zentimetern, bspw. 32 mm. Zum Beispiel sind die Permanentmagnete 13 ca. 14 mm breit und in einem 16 mm Raster angeordnet, also in einem Abstand ("Spalt") von 2 mm zwischen den einzelnen Permanentmagneten 13. Die magnetische Periode ist bei diesem Beispiel folglich 32 mm lang.

Jedes optionale Verstärkungselement 1215 ist bei den gezeigten Ausführungsbeispielen trapezförmig ausgebildet. Bei einem anderen Ausführungsbeispiel sind Verstärkungselemente 1215 dreiecksförmig ausgebildet. Auch andere Formen kommen in Betracht, beispielsweise eine Sinusform oder dergleichen. In herstellungstechnischer Hinsicht können indessen geradlinig verlaufenden Verstärkungselemente 1215, wie in den Zeichnungen dargestellt, vorteilhaft sein.

Die optionale Verstärkungsstruktur 121 wird zum Beispiel in die Jochplatte 12 eingefräst. Bei einer anderen Ausführungsform wird die Verstärkungsstruktur 121 separat hergestellt und dann an der Jochplatte 12 befestigt.

Vorgeschlagen wird hier weiter eine bestimmte Ausrichtung zwischen der optionalen Verstärkungsstruktur 121 einerseits und den Montagestellen 111 sowie den Befestigungsaufnahmen 123 andererseits.

Zum Beispiel sind für jede Periode der optionalen Verstärkungsstruktur 121 genau eine Montagestelle 111 und genau eine Befestigungsaufnahme vorgesehen.

Die optionale Verstärkungsstruktur 121 ist derart an der Jochplatte 12 angeordnet, dass die lokalen Minima 1212 entlang der Richtung des magnetischen Pfades mit den Montagestellen 111 überlappen. Jeder Montagestelle 111 ist also genau ein lokales Minimum 1212 der Verstärkungsstruktur 121 einer der Jochplatten 12 zugeordnet. Die Montagestellen 111 können auch als durchgängige Aussparungen ausgebildet sein, beispielsweise als durchgängige Gewindebohrungen, so dass jeder Montagestelle 111 zwei gegenüberliegende lokale Minima 1212 beider Verstärkungsstrukturen 121 der Jochplatten 12 zugeordnet sind.

Die optionale Verstärkungsstruktur 121 ist bei den gezeigten Ausführungsbeispielen weiter derart angeordnet, dass die Jochplatte 12 an ihren beiden Enden in Längsrichtung jeweils mit einem lokalen Maximum 1211 abschließt. Somit befinden sich die beiden, zu den Enden am nächsten liegenden Montagestellen 111 um jeweils eine halbe Periode der Verstärkungsstruktur 121 von den Enden entfernt, genau, wie die beiden nächsten Minima 1211.

Die Anordnung von Montagestellen 111 in einem Raster entsprechend einer ganzen Periode der optionalen Verstärkungsstruktur 121 hat weiter den Vorteil, dass sie die Montage des Sekundärteils 10 in einer Anwendung entsprechend eben diesem Rastermaß erlaubt. Insbesondere im Falle einer sequenziellen Anordnung mehrerer Sekundärteile zur Ausbildung längerer magnetischer Pfade für das Primärteil 20 kann dies vorteilhaft sein. Die sequentiell angeordneten Sekundärteile 10 knüpfen beispielsweise entlang einer Geraden "nahtlos" aneinander an, sodass in der Anwendung alle Kopplungsstellen (also Gegenstellen) für die Montagestellen 111 der sequentiell angeordneten Sekundärteile 10 im besagten Rastermaß (und insbesondere unabhängig von den Positionen der Übergänge zwischen den sequentiell angeordneten Sekundärteilen 10) vorgesehen werden können.

Außerdem ist die optionale Verstärkungsstruktur 121 bei den gezeigten Ausführungsbeispielen derart angeordnet, dass die lokalen Maxima 1211 in Längsrichtung mit den Befestigungsaufnahmen 123 überlappen. Über die Befestigungsaufnahmen 123 erfolgt, wie gesagt, die Befestigung der Jochplatten 12 an dem Abstandsglied 11. Der Überlapp zwischen den lokalen Maxima 1211 einerseits und den Befestigungsaufnahmen 123 andererseits hat den Vorteil, dass die Jochplatten 12 an jenen Stellen mit dem Abstandsglied 11 befestigt sind, wo eine maximale Steifigkeit der Jochplatten 12 vorliegt. Bei einer Ausführungsformen ist an den beiden Enden des Sekundärteils 10 der jeweilige Überlapp zwischen den lokalen Maxima 1211 einerseits und den Befestigungsaufnahmen 123 andererseits nicht oder nur teilweise ausgebildet; die beiden (bzw. vier) Befestigungsaufnahmen 123 sind dort, beispielsweise aufgrund raumgeometrischer Anforderungen, geringfügig in Richtung Mitte des Sekundärteils 10 versetzt.

Weitere optionale Merkmale des Sekundärteils 10 werden mit Blick auf die übrigen Zeichnungen erläutert.

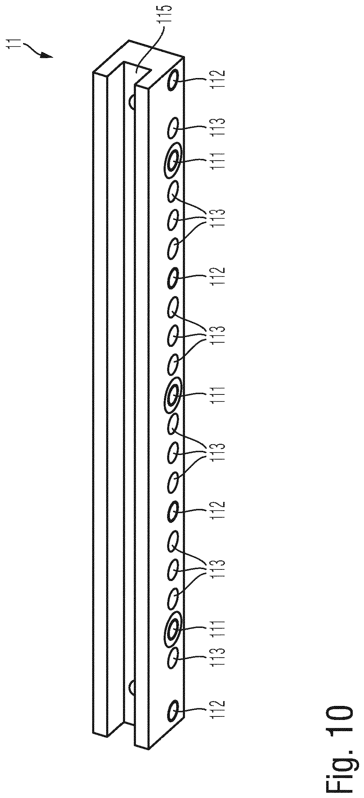

Bei einer Ausführungsform weist das Abstandsglied 11 zur weiteren Gewichtsreduzierung eine Vielzahl von durchgängigen, beispielsweise zylinderförmigen Aussparungen 113 auf, wie sie schematisch in der Fig. 7 und Fig. 10 gezeigt sind. In diese durchgängigen Aussparungen 113 greifen beispielsweise keine Befestigungselemente oder dergleichen ein; vielmehr sind diese freibleibend. Die Anzahl der durchgängigen Aussparungen 113 sowie der jeweilige Durchmesser werden so gewählt, dass die mit den durchgängigen Aussparungen 113 einhergehende Gewichtsreduzierung die Stabilität des Sekundärteils 10 nicht gefährdet.

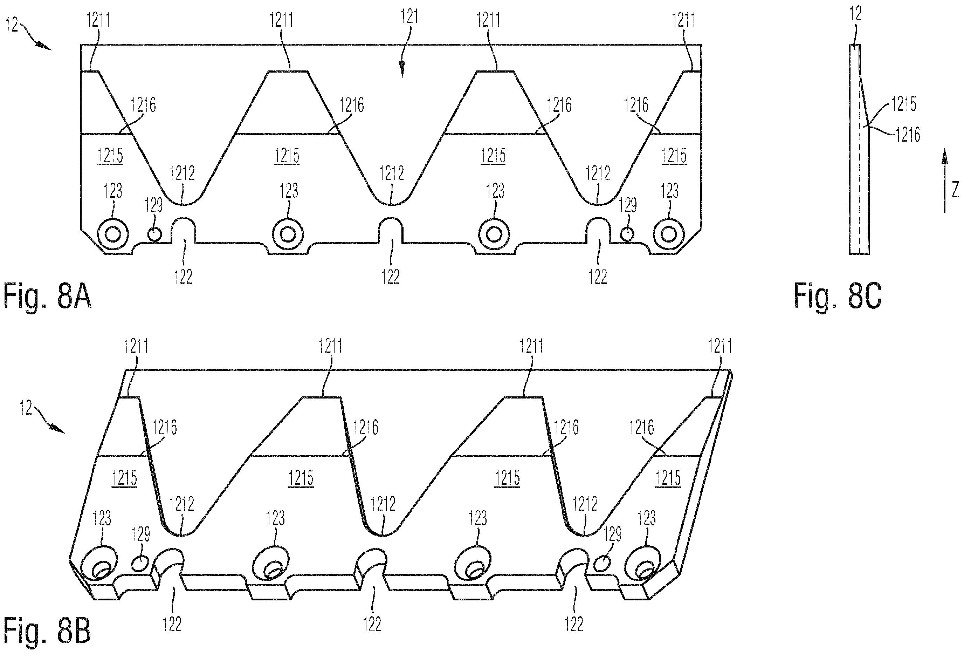

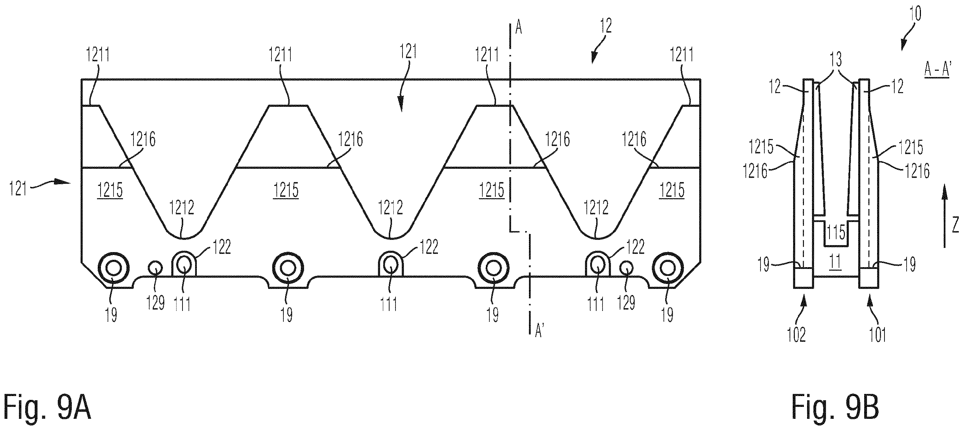

Wie zum Beispiel auch in den Fig. 6B, 8B und 11 dargestellt, ist bei manchen Ausführungsbeispielen vorgesehen, dass jedes Verstärkungselement 1215 zumindest in einem oberen Teilbereich eine entlang der Höhe des jeweiligen Schenkels (also in Erstreckungsrichtung Z) abnehmende Breite aufweist. Auf diese Weise wird eine weitere Gewichtsreduzierung erzielt. Die jeweilige Abnahme der Breite wird z.B. durch eine Fase ausgebildet, die im oberen Teilbereich des betreffenden Verstärkungselements 1215 ansetzt, beispielsweise an der Linie 1216, die sich im oberen Drittel des Verstärkungselements 1215 befindet. Die Fase setzt sich bis zum Abschluss des Verstärkungselements 1215 fort, beispielsweise derart, dass bei Abschluss die Breite stetig in die Basisplattenstärke der Jochplatte 12 übergeht, wie z.B. in den Fig. 8C und 9B gezeigt.

Die Jochplatten 12 sind bei einer Ausführungsform außerdem mit weiteren, beispielsweise zylinderförmigen Aussparungen 129 versehen, die während der Montage dazu verwendet werden können, um die beiden Seiten 101, 102 des Sekundärteils 10 auf das Abstandsglied 11 auszurichten. Beispielsweise werden dazu (in den Zeichnungen nicht dargestellte) Ausrichtungsstifte durch die Aussparungen 129 geführt und dort gehalten, bis eine Befestigung der Jochplatten über die Komponenten 19 und 123 erfolgt ist. Hiernach werden die Befestigungsstifte wahlweise entfernt oder verbleiben in den Aussparungen 129.

Mit Bezug auf das Ausführungsbeispiel gemäß Fig. 11 gilt das schon bereits zu Fig. 1 Ausgeführte entsprechend. Bei dem Ausführungsbeispiel gemäß Fig. 11 sind die optionalen Verstärkungsstrukturen 121 vorgesehen, die entsprechend den vorstehenden Schilderungen ausgebildet sein können.

## Patentansprüche

1. Eisenloser Linearmotor (100) mit einem Primärteil (20) und einem Sekundärteil (10), das einen magnetischen Pfad (M) für das Primärteil (20) bereitstellt, wobei das Primärteil (20) für eine lineare Bewegung entlang des magnetischen Pfads (M) ausgebildet ist, und wobei das Sekundärteil (10) umfasst:
- ein Abstandsglied (11),
- zwei Schenkel ausbildende Jochplatten (12), die für eine Befestigung an dem Abstandsglied (11) ausgebildet sind, so dass sie sich, einander gegenüberliegend, in Ebenen parallel zum magnetischen Pfad (M) erstrecken,
- eine Vielzahl von Permanentmagneten (13), die an zum magnetischen Pfad (M) weisenden Innenseiten der Jochplatten (12) angebracht sind, wobei,
- die Permanentmagneten (13) jeweils eine Breite (a, a') aufweisen, die in einer senkrecht zum magnetischen Pfad (M) weisenden Erstreckungsrichtung (Z) abnimmt, sodass die Luftspaltbreite (X) entlang der Erstreckungsrichtung (Z) konstant ist; **dadurch gekennzeichnet, dass**
- das Primärteil (20) eine entlang der Erstreckungsrichtung (Z) konstante Breite (b) aufweist.

2. Eisenloser Linearmotor (100) nach Anspruch 1, wobei die Permanentmagneten (13) an ihrer jeweiligen, zum Abstandsglied (11) weisenden Unterseite (131) eine maximale Breite (a) aufweisen und an ihrer jeweiligen Oberseite (132) eine minimale Breite (a').

3. Eisenloser Linearmotor (100) nach Anspruch 2, wobei die minimale Breite (a`) weniger als 98% der maximalen Breite (a) beträgt.

4. Eisenloser Linearmotor (100) nach einem der vorstehenden Ansprüche, wobei die Breite (a, a') entlang wenigstens 40% der Höhe (h) des jeweiligen Permanentmagneten (13) in Erstreckungsrichtung (Z) abnimmt.

5. Eisenloser Linearmotor (100) nach einem der vorstehenden Ansprüche, wobei die Breite (a, a') wenigstens in einem unteren Anteil (133) des jeweiligen Permanentmagneten (13) in Erstreckungsrichtung (Z) konstant ist, und wobei die Breite (a, a') nur in einem oberen Anteil (134) des jeweiligen Permanentmagneten (13) abnimmt.

6. Eisenloser Linearmotor (100) nach einem der vorstehenden Ansprüche, wobei die Breite (a, a') entlang der Erstreckungsrichtung (Z) linear abnimmt.

7. Eisenloser Linearmotor (100) nach einem der vorstehenden Ansprüche, wobei die Permanentmagneten (13) jeweils eine senkrecht zum Magnetpfad (M) liegende trapezförmige Querschnittsfläche aufweisen.

8. Eisenloser Linearmotor (100) nach einem der vorstehenden Ansprüche 1 bis 5, wobei die Breite (a, a') entlang der Erstreckungsrichtung (Z) nicht-linear abnimmt.

9. Eisenloser Linearmotor (100) nach einem der vorstehenden Ansprüche, wobei die Permanentmagneten (13) jeweils eine senkrecht zum Magnetpfad (M) liegende Querschnittsfläche aufweisen, die sich in Richtung des Magnetpfads (M) nicht verändert.

10. Eisenloser Linearmotor (100) nach einem der vorstehenden Ansprüche, wobei die zwei Jochplatten (12) jeweils eine senkrecht zum Magnetpfad (M) liegende im Wesentlichen rechteckförmige Querschnittsfläche aufweisen.

11. Eisenloser Linearmotor (100) nach einem der vorstehenden Ansprüche 1 bis 10, wobei die zwei Jochplatten (12) an ihrer jeweiligen Außenseite eine Verstärkungsstruktur (121) aufweisen, die durch eine in Richtung des magnetischen Pfades (M) periodische Veränderung der Plattenbreite gebildet ist.

12. Eisenloser Linearmotor (100) nach Anspruch 11, wobei das Abstandsglied (11) eine Anzahl Montagestellen (111) aufweist, die für eine Befestigung des Sekundärteils (10) in einer Anwendung ausgebildet sind, wobei lokale Minima (1212) der Verstärkungsstruktur (121) entlang der Richtung des magnetischen Pfades (M) mit den Montagestellen (111) überlappen.

## Claims

1. Ironless linear motor (100) with a primary part (20) and a secondary part (10) which provides a magnetic path (M) for the primary part (20), the primary part (20) being configured for a linear movement along the magnetic path (M), and the secondary part (10) comprising:
- a spacer element (11),
- yoke plates (12) which configure two limbs and are configured for fastening to the spacer element (11), with the result that they extend, lying opposite one another, in planes parallel to the magnetic path (M),
- a multiplicity of permanent magnets (13) which are attached to inner sides, pointing towards the magnetic path (M), of the yoke plates (12),
- the permanent magnets (13) each having a width (a, a') which decreases in a direction of extent (Z) pointing perpendicularly towards the magnetic path (M), with the result that the air gap width (X) is constant along the direction of extent (Z); **characterized in that**
- the primary part (20) has a width (b) which is constant along the direction of extent (Z).

2. Ironless linear motor (100) according to Claim 1, the permanent magnets (13) having a maximum width (a) on their respective lower side (131) pointing towards the spacer element (11) and a minimum width (a') on their respective upper side (132).

3. Ironless linear motor (100) according to Claim 2, the minimum width (a') being less than 98% of the maximum width (a).

4. Ironless linear motor (100) according to one of the preceding claims, the width (a, a') decreasing in the direction of extent (Z) along at least 40% of the height (h) of the respective permanent magnet (13).

5. Ironless linear motor (100) according to one of the preceding claims, the width being constant in the direction of extent (Z) at least in a lower part (133) of the respective permanent magnet (13), and the width (a, a') decreasing only in an upper part (134) of the respective permanent magnet (13).

6. Ironless linear motor (100) according to one of the preceding claims, the width (a, a') decreasing in a linear manner along the direction of extent (Z).

7. Ironless linear motor (100) according to one of the preceding claims, the permanent magnets (13) each having a trapezoidal cross-sectional area which lies perpendicularly with respect to the magnetic path (M).

8. Ironless linear motor (100) according to one of the preceding Claims 1 to 5, the width (a, a') decreasing in a non-linear manner along the direction of extent (Z).

9. Ironless linear motor (100) according to one of the preceding claims, the permanent magnets (13) each having a cross-sectional area which lies perpendicularly with respect to the magnetic path (M) and does not change in the direction of the magnetic path (M).

10. Ironless linear motor (100) according to one of the preceding claims, the two yoke plates (12) each having a substantially rectangular cross-sectional area which lies perpendicularly with respect to the magnetic path (M) .

11. Ironless linear motor (100) according to one of the preceding Claims 1 to 10, the two yoke plates (12) having, on their respective outer side, a reinforcing structure (121) which is formed by way of a change in the plate with which is periodic in the direction of the magnetic path (M).

12. Ironless linear motor (100) according to Claim 11, the spacer element (11) having a number of mounting points (111) which are configured for fastening the secondary part (10) in one application, local minima (1212) of the reinforcing structure (121) along the direction of the magnetic path (M) overlapping with the mounting points (111).

## Revendications

1. Moteur linéaire sans fer (100) avec une partie primaire (20) et une partie secondaire (10) qui fournit un chemin magnétique (M) pour la partie primaire (20), la partie primaire (20) étant configurée pour un déplacement linéaire le long du chemin magnétique (M), et la partie secondaire (10) comprenant :
- un organe d'espacement (11),
- des plaques de culasse (12) formant deux branches, qui sont configurées pour une fixation à l'organe d'espacement (11) de telle sorte qu'elles s'étendent, l'une en face de l'autre, dans des plans parallèlement au chemin magnétique (M),
- une pluralité d'aimants permanents (13), qui sont montés sur des côtés intérieurs des plaques de culasse (12), orientés vers le chemin magnétique (M),
- les aimants permanents (13) présentant chacun une largeur (a, a') qui diminue dans une direction d'extension (Z) orientée perpendiculairement au chemin magnétique (M), de telle sorte que la largeur d'entrefer (X) est constante le long de la direction d'extension (Z) ; **caractérisé en ce que**
- la partie primaire (20) présente une largeur (b) constante le long de la direction d'extension (Z).

2. Moteur linéaire sans fer (100) selon la revendication 1, les aimants permanents (13) présentant une largeur maximale (a) sur leur côté inférieur respectif (131) orienté vers l'organe d'espacement (11) et une largeur minimale (a') sur leur côté supérieur respectif (132).

3. Moteur linéaire sans fer (100) selon la revendication 2, la largeur minimale (a') étant inférieure à 98 % de la largeur maximale (a).

4. Moteur linéaire sans fer (100) selon l'une quelconque des revendications précédentes, la largeur (a, a') diminuant le long d'au moins 40 % de la hauteur (h) de l'aimant permanent respectif (13) dans la direction d'extension (Z).

5. Moteur linéaire sans fer (100) selon l'une quelconque des revendications précédentes, la largeur (a, a') étant constante dans la direction d'extension (Z) au moins dans une partie inférieure (133) de l'aimant permanent respectif (13), et la largeur (a, a') ne diminuant que dans une partie supérieure (134) de l'aimant permanent respectif (13).

6. Moteur linéaire sans fer (100) selon l'une quelconque des revendications précédentes, la largeur (a, a') diminuant linéairement le long de la direction d'extension (Z).

7. Moteur linéaire sans fer (100) selon l'une quelconque des revendications précédentes, les aimants permanents (13) présentant chacun une surface de section transversale trapézoïdale située perpendiculairement au chemin magnétique (M).

8. Moteur linéaire sans fer (100) selon l'une quelconque des revendications 1 à 5 précédentes, la largeur (a, a') diminuant de manière non linéaire le long de la direction d'extension (Z).

9. Moteur linéaire sans fer (100) selon l'une quelconque des revendications précédentes, les aimants permanents (13) présentant chacun une surface de section transversale située perpendiculairement au chemin magnétique (M) qui ne varie pas dans la direction du chemin magnétique (M).

10. Moteur linéaire sans fer (100) selon l'une quelconque des revendications précédentes, les deux plaques de culasse (12) présentant chacune une surface de section transversale essentiellement rectangulaire située perpendiculairement au chemin magnétique (M).

11. Moteur linéaire sans fer (100) selon l'une quelconque des revendications 1 à 10 précédentes, les deux plaques de culasse (12) présentant sur leur côté extérieur respectif une structure de renforcement (121) qui est formée par une variation périodique de la largeur de plaque dans la direction du chemin magnétique (M).

12. Moteur linéaire sans fer (100) selon la revendication 11, l'organe d'espacement (11) présentant un nombre d'emplacements de montage (111) qui sont configurés pour une fixation de la partie secondaire (10) dans une application, des minima locaux (1212) de la structure de renforcement (121) le long de la direction du chemin magnétique (M) se chevauchant avec les emplacements de montage (111).
